# EUROPEAN PATENT APPLICATION

(11) **EP 2 315 115 A1**
(43) Date of publication of application: **27.04.2011**
(21) Application number: 09382229.4
(22) Date of filing: 23.10.2009
(51) Int. Cl.: G06F 9/445

(54) **Method and system for managing the software distribution and maintenance in hostile environments**

(71) Applicant: Iriscene Software Corporation, S.L., 28023 Madrid (ES)
(72) Inventor: Navas Santamaria, Javier, E-28023, Madrid (ES); Guío Mena, Susana, E-28023, Madrid (ES); García Gallardo, Orión, E-28023, Madrid (ES); De Prat Martí, José Luis, E-28023, Madrid (ES)
(74) Representative: ABG Patentes, S.L.

(57) **Abstract**

The present invention refers to a method and a system for managing, in a hostile environment, the software maintenance and distribution in a system that includes a server and at least one terminal. The method of the invention comprises: identifying the situation in which a software clement in distribution in a terminal is, attributing to said software element a state from a group of predefined states; periodically checking the correspondence between the state attributed to each software element and their actual situation; monitoring transitions between states of the software elements; and relating the software elements to be distributed by means of dependencies for the automated assignment of software elements to the terminals according to a dependencies tree.

## Description

### Field of the Invention

The present invention deals with computer systems and/or networks. In particular, the present invention relates to the field of remote management of groups of terminals, specifically to the issues of software distribution and maintenance in said groups.

### Background and prior art

The invention aims to solve the problem of the correctness and availability of software distributed in hostile environments.

It should be understood as "hostile environment" an environment where the probability of events that affect the process of installing the distributed software or the software itself once already installed, at some point in their life cycle, is significant, mainly due to malicious users.

In hostile environments it is not possible to control the nature of the event or its originating agent. In said environments users can act maliciously by trying to destabilize the system. In addition, systems in said environments can be protected with automatic restoration elements, which, when providing the stability of the same, hinder the remote update of said systems.

The solution consists in automatic actions taken by the tool itself to counterfeit the degradation of the correctness and availability of distributed software; or in the generation of alerts that inform the system operator of such degradation, so that the detection should not depend on the skill of the operator.

In the present document, software correctness shall be understood as the appropriate deployment of software, measured ultimately by the correct execution of the task for which it was conceived.

In addition to the continuous corrective actions, the invention includes a dependency management between applications and/or software to be deployed, in order to ensure the expected success and proper functioning of all distributed packages.

In the present document, software availability shall be understood as the holding of the correction over time. The security, at the time of discharge, of the correctness of software is a poor value unless it is renewed periodically.

The invention will also take into account the possibility that the systems are protected by automatic restoration systems that prevent an ordinary modification of the software already installed.

Solutions for software delivery are already known (U.S. 6493871 B1), however, the common assumption is their applicability to friendly environments in which the probability of occurrence of adverse events only takes non-negligible values for the case of network communications.

The assumption of the immutability of distributed software, except by action of its own software distribution solution, is also accepted.

### General description of the invention

The present invention solves the technical problems described above. For this, a method for managing software distribution and maintenance in a hostile environment is provided according to independent claim 1 and a system for managing software distribution and maintenance is provided according to independent claim 11. The dependent claims present preferred embodiments of the present invention.

In a first aspect, the invention provides a method for managing in a hostile environment the software distribution and maintenance in a system comprising a server and at least one terminal, the method comprising:
- identifying the situation in which a software element in distribution in a terminal is and attributing to said software element a state from a group of predefined states;
- periodically checking the correspondence between the state attributed to each software element and their actual situation;
- monitoring transitions between states of the software elements and
- relating the software elements to be distributed by means of dependencies for the automated assignment of software elements to the terminals according to a dependencies tree.

In the context of the present invention, a software element in distribution shall be understood as the software element from the moment it has been assigned for installation in one or more terminals.

According to the present invention, a list of states is defined wherein any software element in distribution from a central server to one or more terminals inhabiting the hostile environment can be. Also, the subset of states considered erroneous, i.e. those who would harm the correctness and availability of software, is determined from the set of possible states.

The method of the invention can perform the following tasks, regardless of the software distribution itself:
1 st .- Collecting and updating in a continuous manner the situation in which each distributed software element is, in any managed terminal, by associating to each one of these software elements one of the states defined. This association can be accessed via graphical interface or obtained through some automated method that performs the relevant invocations to the functions designed for that purpose.
2nd .- Periodically checking the correspondence between the state attributed to each software element in each terminal with its actual situation. Updating the associated state if discrepancies are discovered and, in certain scenarios, taking automated actions to redirect the software element to its original state.
3rd .- A software element can be exclusively in correct states, and still suffer a real deterioration in its availability. The invention monitors the abnormal transitions between correct states, allowing alerting this occurrence to the operator and/or automatically solving the found problem.

The assignment of software elements can lead by itself to a degradation of the correction of the system or element itself This happens when a software element is assigned to a terminal without taking into account its dependencies, which indicate the needs of the software element of other software elements in order to work properly.

The present invention allows the definition, through the invocation of functions designed for that purpose, of dependencies between different software elements to be distributed, so when one element depending on others is assigned to a terminal, the invention makes an implicit assignment of these other elements on which the first element depends, automatically assigning them to the same terminal or terminals to which the first software element is assigned and automatically prioritizing, so that the installation of various software elements in the correct sequence is ensured.

The invention allows the application of current techniques for software distribution in hostile environments, providing a behavior model for adverse events such as faulty installation, inadvertent or malicious uninstallation, software malfunction due to lack of certain requirements in their deployment (software dependencies, machine requirements, etc.).

The method of the invention may comprise performing one or more actions intended to infer the final outcome of a software element installation, such as verification of the existence of registry keys, the presence of files, etc.

The state of the art is prolix when it comes to define behaviors in positive scenarios. The present invention has the advantage over existing systems of predicting the existence of negative scenarios and defining a behavior to notice this fact or even address it automatically, without intervention by the system operator.

The presence of dependence definitions between complex software elements ensures that the terminals meet the requirements for the proper functioning of all elements assigned.

Also, said dependencies can ensure that the terminals receive correctly the necessary system updates or applications, automatically and without the need for the operator to include these elements on the manual assignments of software elements to be distributed.

In a second aspect of the invention a system for managing software distribution and maintenance in a software distribution system located in a hostile environment is provided, the software distribution system comprising a central server and at least one terminal, the system for managing software distribution and maintenance comprising means adapted to perform the method according to the first aspect of the invention.

The central server may comprise a database, web services and/or a graphic interface application.

### Description of the drawings

The invention is described below making reference to a series of figures wherein, for illustrative and non limitative purposes, is represented the following:
FIGURE 1 shows a schematic representation of an embodiment of the system of the invention.
FIGURE 2 shows the transitions considered as not abnormal between states of distributed software elements.
FIGURE 3 shows a flow chart corresponding to a reinstallation of a software element.
FIGURE 4 shows an example of the structure of dependencies between various software elements.
FIGURE 5 shows the logic of assignment of the central server for a scenario.

### Detailed description of the invention

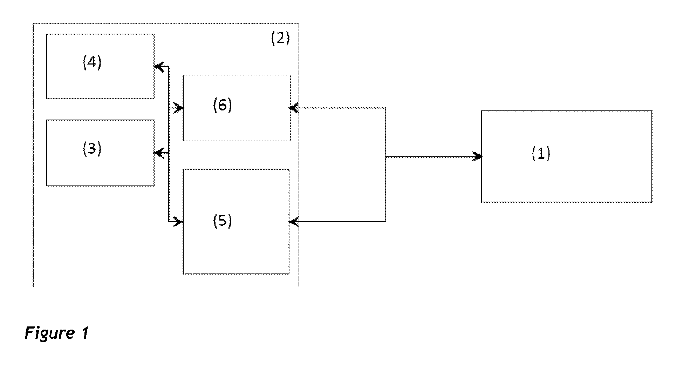

In Figure 1 a preferred embodiment of the system of the invention is schematically shown, the system comprising means assigned to a central server (2) in which the software elements (5) to be distributed are located, these software elements being stored or created for distribution, and an agent (1) installed in each of the terminals. The central server (2) has available a number of functions (3) (e.g., by invocation or by graphical interface (4)) whereby assignments of software elements to the terminals are performed. Once the updates have been assigned, the agents (1) start their downloading according to certain distribution logic (6).

Terminals inquire periodically about the status of their assignments and, as they are informed of changes, they operate according to a preprogrammed sequence. Changes may involve either the actual implementation of the assignments: download of the software element (5) and installation thereof; either the revocation of them: uninstalling and optionally deleting the software element (5).

Hitherto are the components of the invention common in the current state of the art.

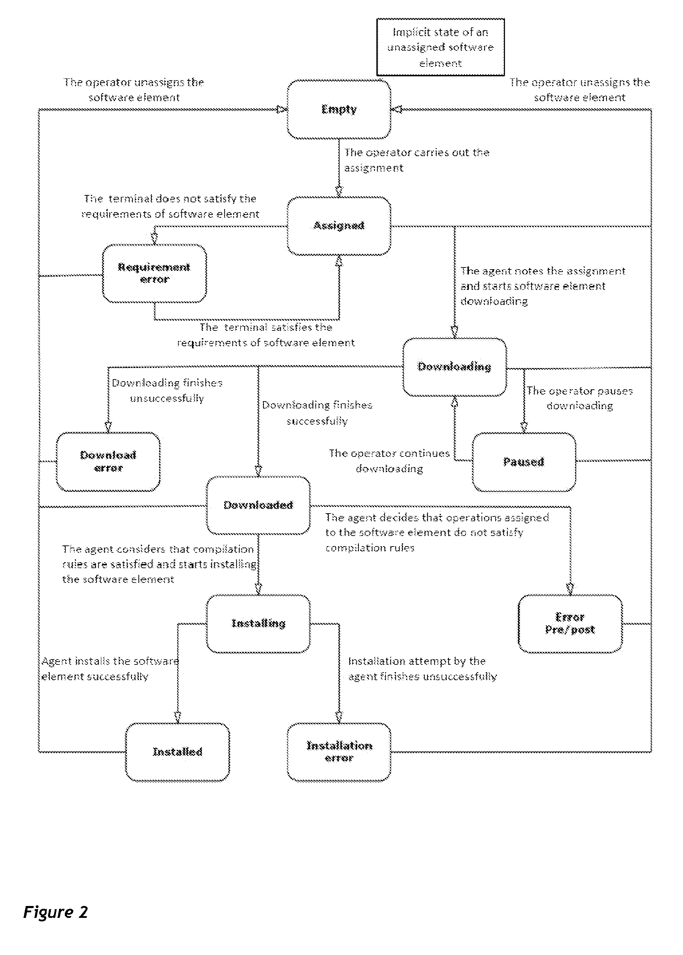

The present invention defines the states in which, at any given time, a software element (5) in distribution may be found at any given terminal. Figure 2 shows the transitions between states of software elements (5) considered not anomalous.

From the possible states of a software element (5) in distribution the following states may be defined:
Assigned: In which the software element (5) has been assigned to the terminal, but the agent (1) residing in said terminal has not yet taken any action in this regard.
**Installed:** In which the agent residing in the terminal has finished successfully the installation of the software element (5).
**Downloaded:** In which the agent (1) residing in the terminal has finished successfully the download of the software element (5) but has not yet executed any action with the downloading file.
**Paused:** In which the agent (1) has executed the pause command over one or more downloads in progress. This command is ordered by the operator via the central server (2) Graphical User Interface (4) or is generated automatically through invocation of the adequate function (3) by an automated external service (e.g., control of the maximum number of downloading terminals).
**Installation Error:** The agent (1) installed in the terminals may carry out, optionally, the checking of the existence of the software element (5) to be distributed in the target terminal. In such a case, said checking is repeated at the end of the software distribution process, determining if the installation of the software element (5) has been successful or not. A negative scenario shall cause the transition to the state described in this paragraph.

The checking is carried out by verifying the existence of a list of files and/or registry keys that the operator defines when the software element (5) is created.

An example, in a hostile environment, wherein an installation error could occur could be as follows. A user, either maliciously or inadvertently, revokes the writing permissions of the directory wherein a software element (5) must be installed. In the scenario outlined here, without this second checking, it would be impossible for the system to determine the success or failure of software distribution.

**Requirements Error:** In addition to the software requirements, which can be guaranteed by the tool itself, it is possible to condition the software distribution to hardware requirements, as may be the existence of a certain amount of RAM, or a certain amount of free space the hard disk.

The system of the invention, at the central server (2), supports the verification of the compliance with these requirements. In those terminals that do not comply with the requirements thresholds defined, the software element (5) evolve to this state.

The invention can perform two kinds of verification of requirements compliance: verification of data stored in a database or real-time data verification. The first one is only possible when there is an inventory database of managed terminals, which database can be accessed by the central server (2).

As a software element (5) is in a Requirement Error state, the requirements associated to that element are checked periodically for said terminal.

**Pre/post-operation Error:** The software elements (5) may be jointly distributed with a series of operations to be executed by the target terminal, these operations being to be performed prior to the installation, after the installation, or after an error in case it takes place.

1st Pre-operations: operations to be executed by the terminal after the software element (5) downloading and prior to its installation. A valid example of the pre-operation command can be the pause command over a service intended to be updated.

2nd Post-operations: operations to be executed by the terminal after the successful installation of the software element (5). A valid example of post-operation can be, linking with the previous example, the starting command over a service that has been updated.

3rd Post-operations on error: the invention allows the execution of specific operations after detecting an incorrect installation of a software element (5). Such operations are particularly valuable in the integration scenarios with recovery tools, since a restoring command can be designated as post-operation on error, so that the terminal returns to the situation prior to the unsuccessful installation.

The integration of operations with the software elements (5) provides great power and versatility to the method and system of the invention. However, if the type of operation that can be executed in each scenario is not controlled, the risk of degrading the proper functioning of the system exists.

In a hostile environment it is usual to have automatic system restoration tools in each restart. This increases the reliability of the system (a reboot or a manual command restores the system to the original installation), but it makes impossible the remote update of said software with traditional methods.

See the following example. An operator wants to distribute an application. This application is distributed to terminals allocating it on a first drive protected by a restoration tool. The same application installation package executes the task, as post-operation, of creating a new snapshot of the system named as *image 2* (it is understood that there was already a system snapshot named as *image 1*).

The operator decides to change the installation directory of the application to a second drive not protected by the restoration tool for example because such application cannot be found among those protected due to client policy.

In an example of correct use by the operator, the operator can create a single package for installing the application on the second unit and which, as post-operation, orders to the restoration tool to return to the previous image (*image 1*) in which that application was not installed. Said action must be executed as post-operation, because even if the application should not be in the first unit, a policy of not depriving users of the service of such application is adopted, making effective the return of the first unit to the previous image (image 1) only in case of successful installation of the package.

The example of misuse runs parallel to the previous case until the operator creates the second package, which must install the application on the second unit. At this point the operator makes a mistake and creates a package that reinstalls the application on the first unit. The result is the creation of a cycle: application installation, restoration of "image 1", application installation, restoration of "image 1" ...

Considering the operator errors as part of the hostile environment, the present invention can detect this and other potential problems introduced by the operator when he/she creates software updates.

It is thus necessary that the agent (1), prior to the execution of the pre-operations, make a verification and compilation of them (as well as post-operations and post-operations on error) so that it is ensured that its execution will not prejudice the proper functioning of the system.

This guarantee will be obtained by checking a set of compilation rules by the agent (1) of the system of the invention, which rules are contained in a configuration file accessible by the agent (1). Said file can be edited and/or updated at the central server (2) and redistributed to the managed terminals by the software distribution system itself That distributed software element (5) whose operations violate the rules of compilation for a given terminal, will be marked with status " Pre/post-operation Error" for that terminal.

**Downloading:** In this state, for a given terminal, will be all those software elements (5) for which the agent (1) has started the download.

**Download error:** This is the state associated with a software element (5) in a given terminal, for which any downloading error has occurred in the terminal.

**Installing:** This is the state indicative of the ongoing installation of a software element (5) by the agent (1).

Except for the case of the first state, Assigned, it is the agent (1) which decides when the transition from one state to another has occurred, its responsibility being to report that transition to the central server (2). If the agent (1) cannot update the change in the central server (2) for any reason, e.g. a fall of communications service, the agent (1) itself would be responsible for retrying the updating after a random period of time. If during the course of that period, the element changes its state again, the agent (1) rules out the oldest changes to report only the most recent ones and, therefore, the ones in effect.

The operator can, through the user interface of the server, restart any software element (5) whose status is wrong, causing that the status becomes Assigned again.

The invention provides through these states a proper granularity for an accurate knowledge of the outcome of the download process. However, paying attention exclusively to this point in time of the life cycle of a distributed software element (5) is not appropriate if the aim is to ensure the survival of that element in the terminals that inhabit a hostile environment.

As it was anticipated in the description of the technical problem faced by the present invention, is not negligible in such environments the possibility of occurrence of events affecting the "survival" of the distributed software elements (5).

Examples of such events could include: deletion of such elements by users or applications, maliciously or inadvertently, execution of recovery commands affecting the partition where the elements reside, corruption of container files of the element, etc...

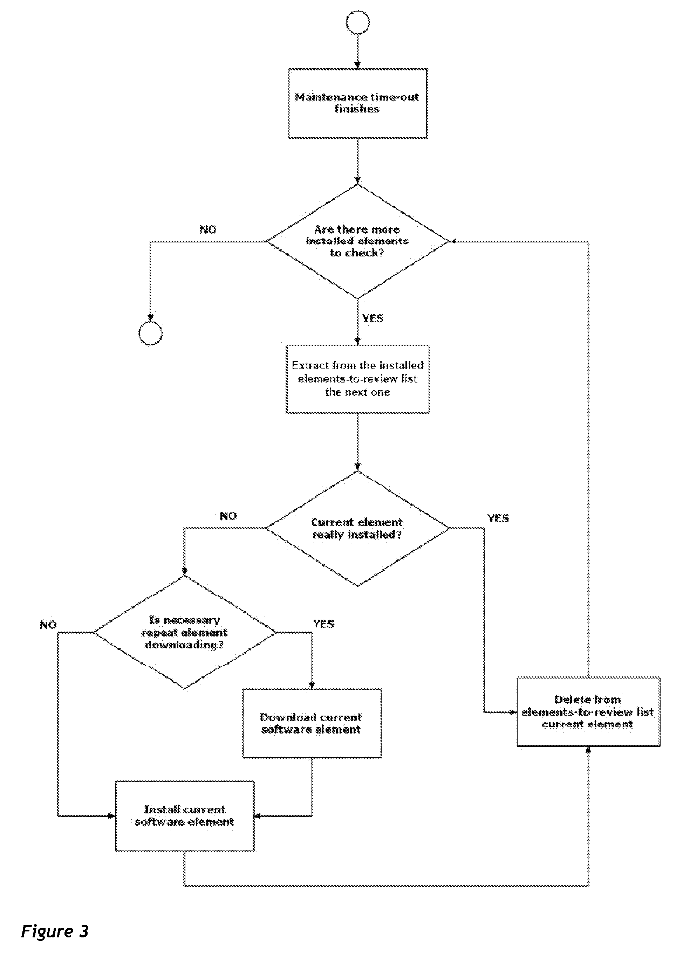

The invention, through its agent (1) installed at the terminals, performs a periodical checking of the effective state of the software elements (5) installed (in the Installed state) at the terminals. Through this periodical checking, the agent (1) notes if the current state of the software element (5) matches the state known by the system. If so, no action is taken concerning the element. Otherwise, the agent (1) is capable of automatically executing maintenance actions that are appropriate for the reinstallation of the element, governed by the flow chart in Figure 3.

A continuous transition of a software element (5) through the so considered correct states is possible, the availability of the distributed software elements (5) being however degraded.

Consider the following scenario as an example:
In the first scenario, a malicious user voluntarily removes a distributed software element (5). The system, through periodical checking by its agent (1), realizes the situation and makes the appropriate maintenance tasks. The malicious user, at his/her next session, deletes the above mentioned software element (5) again so the agent (1) repeats automatically the installation, and so on.

It may be possible that the continuous transition through the states 'installing' and 'installed', goes unnoticed to the operator, so he/she cannot run any appropriate action (shield the software element (5), punish the user, etc.). The agent (1) of the system of the present invention monitors and counts the number of times the software element (5) passes through this transition, so when that transition happens more than once, it can automatically run a specific action and/or generate a notice to be sent to the central server (2), to be stored in a register and/or displayed to the operator at the graphical interface. The invention thus ensures event warning by the operator and allows him/her to decide what measures to adopt.

In the second scenario, a software element (5) is assigned twice to the same terminal. This duplicity in the assignment may occur for several reasons: the software element (5) is covered by another software element also assigned to the terminal; the assignment is made directly to the terminal and duplication is due to the assignment of the same element to a group that includes the terminal, etc.

Considering every software element (5) has a life cycle, it may be possible to decide the withdrawal of such software element (5) after a time in service. With no external aids, the operator could ignore some of the multiple assignments of a software element (5), so it would continue to function in any of the terminals even when it shouldn't. The agent (1) of the system of the invention monitors the non-occurrence of the transition from 'installed' state to 'empty' state, implicit for those terminals where a software element (5) is not installed, generating the dispatch of a notice visible from the graphical interface (4) of the central server (2).

Transitions (or absence of transitions) to be monitored by the central server (2) can be configured by the server operator, whether through the graphical interface (4) or by invoking the functions (3) designed for this purpose. Thus, the agent (1) of the invention can detect a specified sequence of events corresponding for example to an unwanted action of a user, understanding an event as a transition or an absence of transitions.

Finally, the method and system of the invention allow defining dependencies between two or more software elements (5). These may be actual dependencies used to reflect actual needs of software elements (e.g. the fact that element A needs element B to work properly), or artificial needs created by the operator (element A works independently of B, but because business reasons, they should not be distributed separately). The dependencies between the software elements (5) can also be nested, so that the assignment of a software element depending on another one will cause the automatic assignment of the elements on which the software elements, on which the first software element depends, depend.

When a software element (5) dependent on others is assigned for its distribution, the logic of distribution (6) residing on the central server (2) automatically assigns these other elements (i.e., the dependent element "drag" its dependencies), providing them with such a priority so that the installation of each element in the proper order is ensured.

Software elements (5) can be classified into five types of elements:
i) Operating System
ii) Operating System patch or updating.
iii) Application
iv) Application patch or updating.
v) Document or file

The software element (5) type is intrinsic to itself, being its priority of automatic installation based on the very element type (top priority for Operating System, less for files) and its automatic dependencies or based on manual criteria defined by the operator.

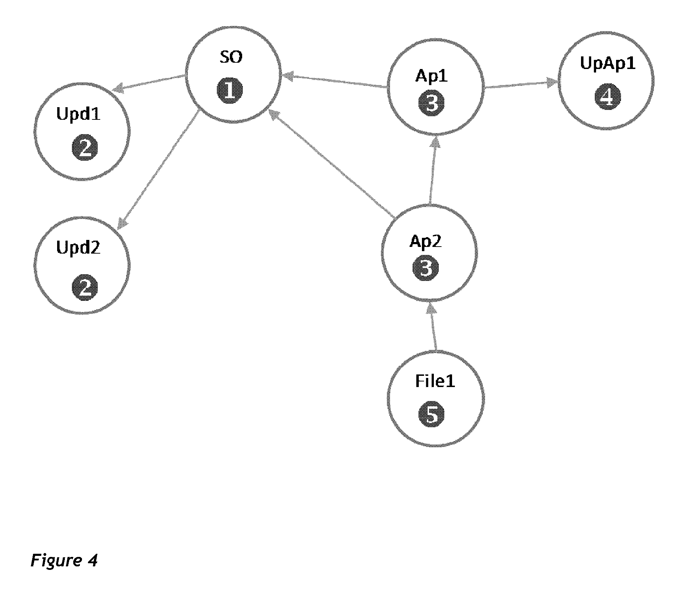

Dependencies, as shown in the example in Figure 4, have tree structure, the dependent software element (5) being the root thereof and the software elements (5) on which it depends being the leaves.

In the example shown in Figure 4, a definition of an Operating System (OS, priority 1), with two updates (Upd1 and Upd2, priority 2), two applications (Ap1 and Ap2, with priority 3), an update of application Ap1 (UpAp1, with priority 4) and a file associated to application Ap2 (File1, Priority 5).

Dependencies may be automatic (in the case of patches/updatings) or defined by the administrator. Also, they may be unidirectional or bidirectional. Among elements with equal priority and having a set dependency relation, agent will work first with the dependent one ("incoming arrow") and then the remaining ones. When no dependencies are indicated, elements are treated by the creation date on the server.

Operating System updates receive an automatic dependency on the Operating System itself, as well as application updates depend on the application. In this case, a business dependence between the two applications has been defined by the operator, application Ap2 being dependent on application Ap1. Not automatically verifiable dependencies at server are once manually set by the operator.

When a software element is assigned to a terminal or group, dependencies ("outgoing arrows") of the element are checked. The agent (1) on each terminal will automatically check such dependencies and make subsequent automatic assignment of every element.

In this example, if the operator assigns software element Ap1 to a terminal, the existence of software element OS, then the existence of the two elements and then the existence of the application itself with its own updates will be previously checked. In this same example, assigning the file "File1", a full installation of all elements shown would be carried out.

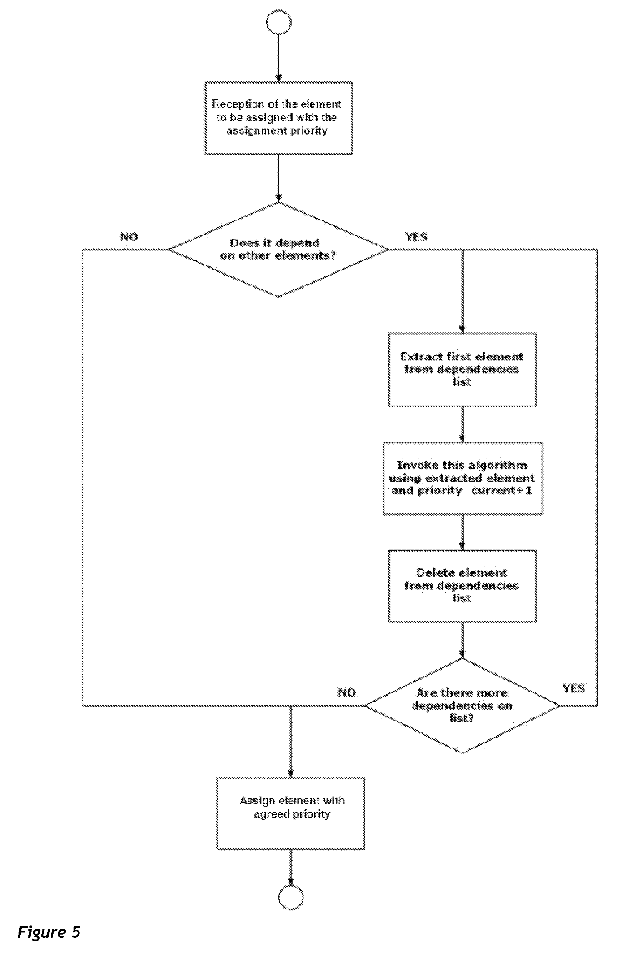

Because of this mechanism, the invention will never assign an element that is already assigned to a given terminal. Figure 5 shows the logic of assignment of the resources associated to the central server (2) for any given scenario.

Given the periodic verification by the agent (1) against the server of the assigned elements, their state and dependencies, the operator is allowed to ignore manual assignment of patches, updates , etc. that are considered critical and which dependence has been defined at the server itself; the agents (1) will carry out the download of the elements necessary a proper function.

## Claims

1. A method for managing in a hostile environment the software distribution and maintenance in a system that comprises a server and at least one terminal, the method comprising:
identifying the situation in which a software element in distribution in a terminal is and attributing to said software element a state from a group of predefined states;
periodically checking the correspondence between the state attributed to each software element and their actual situation;
monitoring transitions between states of the software elements and
relating the software elements to be distributed by means of dependencies for the automated assignment of software elements to the terminals according to a dependencies tree.

2. The method for managing in a hostile environment the software distribution and maintenance according to claim 1 comprising detection of a specified sequence of events, those events being transitions or absence of transitions between states.

3. The method for managing in a hostile environment the software distribution and maintenance according to any of the preceding claims comprising the execution of an automatic action in response to a result of a periodical checking.

4. The method for managing in a hostile environment the software distribution and maintenance according to claim 3 comprising generating an alarm in response to a result of a periodical checking.

5. The method for managing in a hostile environment the software distribution and maintenance according to claim 3 or 4 wherein the result of a periodical checking is selected from the group consisting of the identification of a state considered to be wrong, the detection of a mismatch between the state attributed to a software element and its actual situation, the detection of an anomalous transition between correct states and the detection of non-assignment of software elements necessary for the proper functioning of the assigned ones.

6. The method for managing in a hostile environment the software distribution and maintenance according to any of the previous claims comprising conditioning the distribution of a software element to a terminal to the compliance with one or more requirements, preferably with an inventory of the terminal and/or a measure of the use and/or of the performance of the terminal.

7. The method for managing in a hostile environment the software distribution and maintenance according to any of the previous claims comprising the execution of one or more actions intended to infer the outcome of a software element installation.

8. The method for managing in a hostile environment the software distribution and maintenance according to any of the previous claims comprising the association of one or more operations with a software element to be distributed, conditioning the execution of said one or more operations to the compliance with one or more orders.

9. The method for managing in a hostile environment the software distribution and maintenance according to any of the previous claims comprising nesting dependencies between software elements, so that the assignment of a software element depending on another one will cause the automatic assignment of the elements on which the software elements, on which the first software element depends, depend.

10. The method for managing in a hostile environment the software distribution and maintenance according to any of the preceding claims comprising the automatic assignment of priorities to the dependencies between software elements, so that the installation of the software elements in a proper sequence is ensured.

11. A system for managing the software distribution and maintenance in a software distribution system located in a hostile environment, the software distribution system comprising a central server and at least one terminal, the system for managing the software distribution and maintenance comprising means adapted to perform the method according to any of claims 1-10.

12. The system for managing the software distribution and maintenance in a software distribution system located in a hostile environment according to claim 11, comprising means associated with the central server, adapted to associate one or more operations with a software element to be distributed.

13. The system for managing the software distribution and maintenance in a software distribution system located in a hostile environment according to any of claims 11 or 12 comprising means associated with the central server adapted to nest dependencies between software elements, so that the assignment of a software element depending on another one will cause the automatic assignment of the elements on which the software elements, on which the first software element depends, depend.
